# EUROPEAN PATENT APPLICATION

(11) **EP 3 125 078 A1**
(43) Date of publication of application: **01.02.2017**
(21) Application number: 15179436.9
(22) Date of filing: 31.07.2015
(51) Int. Cl.: G06F 3/03, G06T 7/00, H04N 21/422, H04N 21/4223, G06F 3/0346

(54) **METHOD AND ELECTRONIC DEVICE FOR DETECTING AN OBJECT IN A SENSOR AREA OF A SENSOR**

(71) Applicant: TP Vision Holding B.V., 1097 JB Amsterdam (NL)
(72) Inventor: SEYNAEVE, Dirck Michel, B-9052 Ghent (BE)
(74) Representative: DREISS Patentanwälte PartG mbB

(57) **Abstract**

The invention relates to a method of detecting an object in a sensor area of a sensor. The method comprises the steps of detecting (1) an object in a first region of a sensor area of a sensor, the first region being equal to or smaller than the sensor area, and determining (3) whether the object is used to make a gesture in the first region. The method further comprises the steps of detecting (5) the object in a second region of the sensor area, the second region being smaller than the first region and the first region encompassing the second region, and determining (7) coordinates of the object in the second region, the coordinates representing an absolute position of the object in the second region. The method also comprises the step of causing (9) a display to display a pointer at a position corresponding to the coordinates and to display information in response to the determined gesture. The invention further relates to an electronic device for detecting an object in a sensor area of a sensor.

## Description

### Field of the invention

The invention relates to a method of detecting an object in a sensor area of a sensor.

The invention further relates to an electronic device for detecting an object in a sensor area of a sensor.

The invention also relates to a computer program product enabling a programmable device to perform a method of detecting an object in a sensor area of a sensor.

### Background of the invention

Such a device is known from US2012/280910A1. US2012/280910A1 discloses a control system for controlling a plurality of computer devices. The control system comprises a pointer device and a tracking system arranged to determine an actual position and/or orientation of the pointer device. A user of the system can use the pointer device for moving a cursor on the screen. In an embodiment, the pointing device is a wearable glove and the tracking system is arranged to detect a gesture of the gloved hand, for example a waving gesture.

A drawback of this system is that when the pointer device would be used for moving a cursor as well as for detecting gestures in the same system, at least one of these modes would work sub optimally.

### Summary of the invention

It is a first object of the invention to provide a method of detecting an object in a sensor area of a sensor, which allows a cursor to be moved easily without decreasing the effectiveness of detecting gestures.

It is a second object of the invention to provide an electronic device for detecting an object in a sensor area of a sensor, which allows a cursor to be moved easily without decreasing the effectiveness of detecting gestures.

According to the invention, the first object is realized in that the method of detecting an object in a sensor area of a sensor comprises the steps of detecting an object in a first region of a sensor area of a sensor, said first region being equal to or smaller than said sensor area, determining whether said object is used to make a gesture in said first region, detecting said object in a second region of said sensor area, said second region being smaller than said first region and said first region encompassing said second region, determining coordinates of said object in said second region, said coordinates representing an absolute position of said object in said second region, and causing a display to display a pointer at a position corresponding to said coordinates and to display information in response to said determined gesture.

With the method of the invention, the cursor can be moved easily, because each position in the second region corresponds to a position of the cursor on the screen and the size of the second region can be chosen such that it is not too large, but the effectiveness of detecting gestures does not decrease, because gestures are detected in a different region (the first region) and the size of this different region can be chosen such that it is not too small.

Said determining whether said object is used to make a gesture in said first region may comprise determining that said object is used to make a gesture when the speed of said object in said first region exceeds a predetermined threshold. In this way, a user does not have to select a gesture mode explicitly and does not have to make sure that a gesture extends beyond the boundaries of the second region.

Said determining whether said object is used to make a gesture in said first region may comprise determining that said object is used to make a gesture when said object is detected outside said second region. In this way, a user does not have to select a gesture mode explicitly and does not accidentally trigger gesture detection when moving the pointer relatively fast.

Said sensor may comprise a camera. Advantageously, this camera can also be used for video conferencing applications.

Said object may comprise a light source and detecting said object in said first and second regions may comprise detecting said light source. Advantageously, detection of an object with a light source is more robust than detection of a finger or hand of a user, because it is easier to distinguish from its environment. Said object may be a mobile device like a smart phone, for example. In this case, the light source could be incorporated into a small component that is inserted into a connector of the mobile device, e.g. into a headphone, USB or (micro)SD card connector. An app or application running on the mobile device could control the light source, for example.

Said method may further comprise a step of defining the positions and dimensions of said first and second regions upon detecting a calibration event. This allows the method to adapt to the distance between the sensor and the object rather than the object having to be moved to a certain distance to the sensor for an optimal experience.

Said calibration event may be detected when no object is determined in one of said first region and said sensor area for a predetermined amount of time. This ensures that no separate button is necessary to perform calibration and that calibration is performed more frequently than only at start-up of the device performing the method and/or at start-up of the sensor. The predetermined amount of time may be one or a few seconds, for example, but it may also be in order of milliseconds, for example.

According to the invention, the second object is realized in that the electronic device for detecting an object in a sensor area of a sensor comprises a processor operative to detect an object in a first region of a sensor area of a sensor, said first region being equal to or smaller than said sensor area, determine whether said object is used to make a gesture in said first region, detect said object in a second region of said sensor area, said second region being smaller than said first region and said first region encompassing said second region, determine coordinates of said object in said second region, said coordinates representing an absolute position of said object in said second region, and cause a display to display a pointer at a position corresponding to said coordinates and to display information in response to said determined gesture.

### Brief description of the Drawings

These and other aspects of the invention are apparent from and will be further elucidated, by way of example, with reference to the drawings, in which:
- Fig.1 is a flow diagram of the method of the invention;
- Fig.2 is a block diagram of the device of the invention;
- Fig.3 illustrates an embodiment of device of the invention;
- Fig.4 shows an example of the sensor area, first region and second region of the invention; and
- Fig. 5 shows examples of gestures that can be detected.

Corresponding elements in the drawings are denoted by the same reference numeral.

### Detailed description of the Drawings

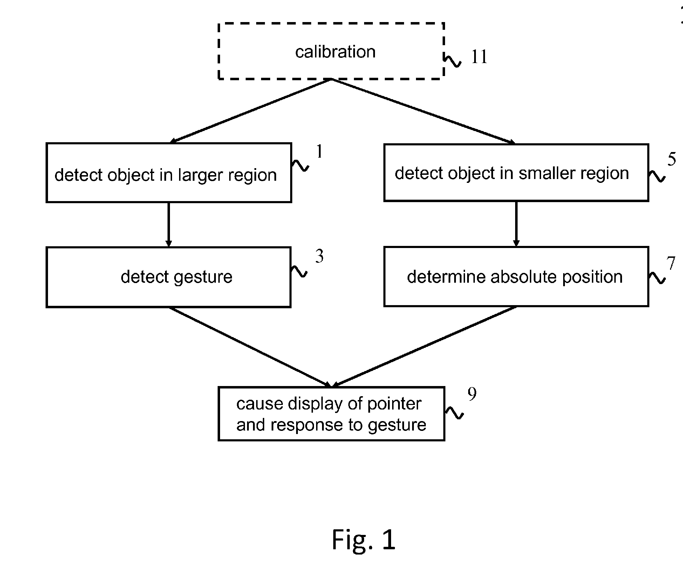

The method of detecting an object in a sensor area of a sensor comprises a step 1 of detecting an object in a first region of a sensor area of a sensor, the first region being equal to or smaller than the sensor area, see Fig.1. A known object detection method may be used to perform such detection. The sensor may be a camera and the object may comprise a light source or have a distinguishing pattern or color (compared to its environment), for example. The object may be a remote control, a pen or a ring, for example. The size of the first region may be 50% of the size of the sensor area, for example. The method further comprises a step 3 of determining whether said object is used to make a gesture in the first region.

The method also comprises a step 5 of detecting the object in a second region of the sensor area, the second region being smaller than the first region and the first region encompassing the second region. The size of the second region may be 25% of the size of the sensor area, for example. The method further comprises a step 7 of determining coordinates of the object in the second region, the coordinates representing an absolute position of the object in the second region. For example, if the sensor has a resolution of 640*480 pixels, the second region is located from position [240, 180] to [400, 300] and the object is detected at position [320, 240], the coordinates can be determined to be [80, 60]. The method also comprises a step 9 of causing a display to display a pointer at a position corresponding to the coordinates and to display information in response to the determined gesture. The information displayed in response to the determined gesture may comprise an identification of the gesture and/or information on the action (to be) performed in response to the determined gesture, for example. The action (to be) performed in response to the determined gestures may be increasing or decreasing audio volume, muting the audio, showing the previous or next image/screen, or changing channels, for example.

Step 1 may be performed before or after step 5 or steps 1 and 5 may be performed in parallel. Optionally, the method comprises a step 11 of defining the positions and dimensions of said first and second regions upon detecting a calibration event. Step 11 is performed before steps 1 and 5. In an embodiment, step 3 comprises determining that said object is used to make a gesture when the speed of said object in said first region exceeds a predetermined threshold. The speed of the object can be detected by comparing subsequent images captured by a camera if the sensor is a camera, for example. Alternatively, the speed of the object may be determined by using an accelerometer incorporated into the object, for example. An example of the threshold is 0.6 meter per second. In the same or in a different embodiment, step 3 comprises determining that said object is used to make a gesture when said object is detected outside said second region. For example, when a pointer is moved just beyond the left side of the display (so to the non-visible part) and then moved up or down, the volume is increased or decreased, respectively.

The method of the invention may be performed by a processor of a device for detecting an object in a sensor area of a sensor and/or by software (for) running on a processor of a device for detecting an object in a sensor area of a sensor.

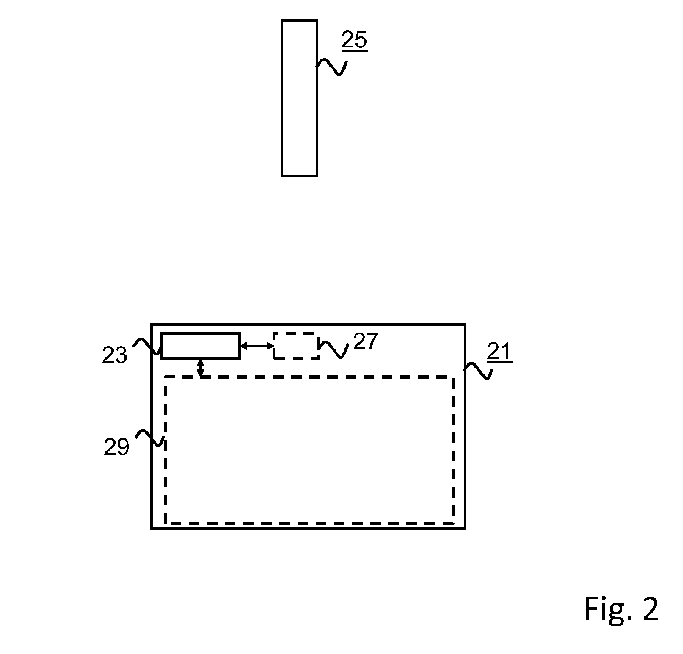

The electronic device 21 for detecting an object 25 in a sensor area of a sensor 27 comprises a processor 23, see Fig. 2. The processor 23 is operative to detect the object 25 in a first region of the sensor area of the sensor 27, the first region being equal to or smaller than the sensor area, determine whether the object 25 is used to make a gesture in the first region, detect the object 25 in a second region of the sensor area, the second region being smaller than the first region and the first region encompassing the second region, determine coordinates of the object 25 in the second region, the coordinates representing an absolute position of the object 25 in the second region, and cause a display 29 to display a pointer at a position corresponding to the coordinates and to display information in response to the determined gesture.

The electronic device 21 may be a television, monitor or an accessory for a television or monitor, for example. The processor 23 may be a general-purpose processor or an application-specification processor, for example. The processor 23 may be a TV SoC, e.g. manufactured by MediaTek, Marvell or Novatek, for example. The object 25 may be a remote control, pen or ring, for example. The sensor 27 may be a camera, possibly equipped with an IR filter, for example. The display 29 may be an LCD, OLED or Plasma display panel or a projection screen, for example. The display 29 may be incorporated into the device 21. The display 29 may comprise a plurality of display panels and/or projection screens. For example, the display 29 may comprise an LCD display panel incorporated into the device 21 and an external projection screen. The device 21 may further comprise one or more of an IR/RF sensor for receiving remote control signals, power supply, tuner, HDMI connector, DisplayPort connector and storage means. The device 21 may be configured to work with multiple (possibly identical) objects 25 at the same time.

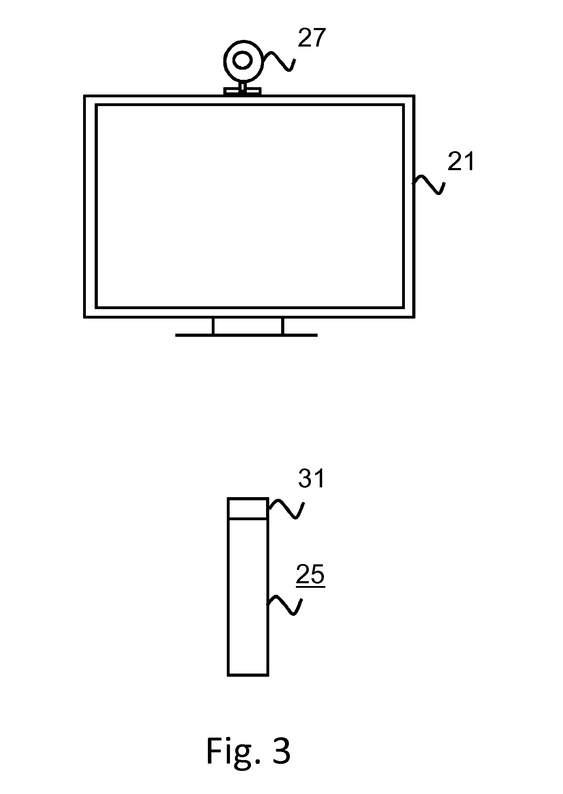

In an embodiment, the electronic device 21 is a TV and the sensor 27 is a camera, see Fig. 3. In this embodiment, the object 25 comprises a light source 31 and detecting the object 25 in the first and second regions comprises detecting the light source 31. The light source 31 may comprise one or more LEDs, for example. These LEDs may be IR LEDs, e.g. with an 850nm light modulation. The camera may capture images at 30 frames per second, for example.

In the same or in a different embodiment, the processor 23 is further operative to define the positions and dimensions of the first and second regions upon detecting a calibration event. The processor 23 may be further operative to detect the calibration event when no object 25 is determined in one of the first region and the sensor area for a predetermined amount of time (e.g. because the object 25 is moved and kept outside the first region or the light source 31 is switched off for a certain period of time). Whether the processor 23 is operative to detect the calibration event when no object 25 is determined in the first region or when no object 25 is determined in the sensor area may differ per embodiment of the device or may be a user configurable setting. The dimensions of the first and second regions may be based on a measurement of the distance between the object 25 and the sensor 27, for example. Several methods of performing such a distance measurement are known. The first detected position of the light source 31 after the calibration event has occurred may be used as center of the first and second regions, for example.

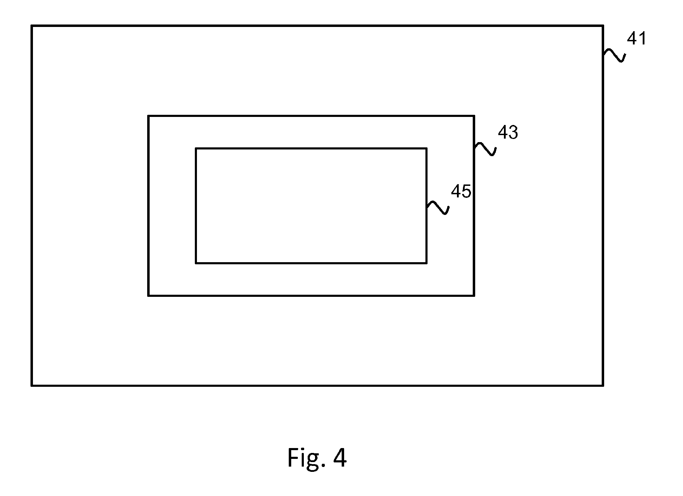

Fig.4 shows an example of the sensor area 41, first region 43 and second region 45 of the invention. The sensor area 41 may have a size of 640*480 pixels, for example. In this example, the size of the first region 43 is approximately 50% of the size of the sensor area 41 and the size of the second region 45 is approximately 25% of the size of the sensor area 41. Gestures are detected in the larger first region 43, while the smaller second region 45 is used to control a pointer on the display.

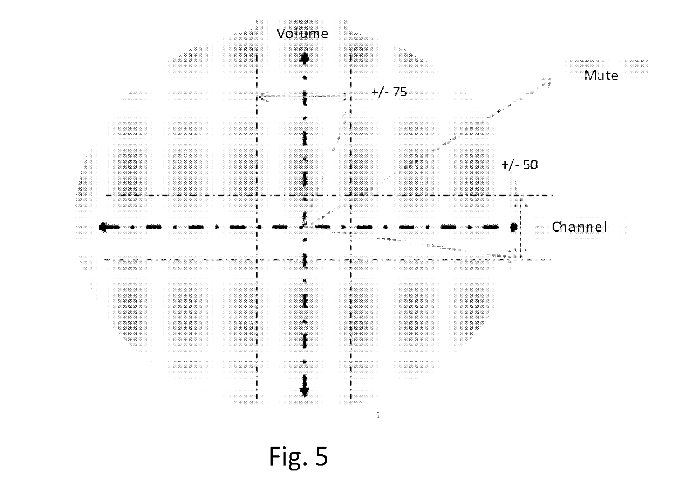

Fig. 5 shows examples of gestures that can be detected with the method and device of the invention. As a first example, a volume down command is determined to be made when a movement of at least 150 pixels vertically and 75 pixels to the left is detected. As a second example, a volume up command is determined to be made when a movement of at least 150 pixels vertically and 75 pixels to the right is detected. As a third example, a channel down command is determined to be made when a movement of at least 250 pixels horizontally and 50 pixels down is detected. As a fourth example, a channel up command is determined to be made when a movement of at least 250 pixels horizontally and 50 pixels up is detected. As a fifth example, a mute command is determined to be made when a movement of at least 200 pixels vertically and 300 pixels horizontally at a speed of >0.5 pixels per millisecond is detected. A gesture can be assumed to be stopped when it has not been completed within a certain amount of time.

While the invention has been described in connection with preferred embodiments, it will be understood that modifications thereof within the principles outlined above will be evident to those skilled in the art, and thus the invention is not limited to the preferred embodiments but is intended to encompass such modifications. The invention resides in each and every novel characteristic feature and each and every combination of characteristic features. Reference numerals in the claims do not limit their protective scope. Use of the verb "to comprise" and its conjugations does not exclude the presence of elements other than those stated in the claims. Use of the article "a" or "an" preceding an element does not exclude the presence of a plurality of such elements.

'Means', as will be apparent to a person skilled in the art, are meant to include any hardware (such as separate or integrated circuits or electronic elements) or software (such as programs or parts of programs) which perform in operation or are designed to perform a specified function, be it solely or in conjunction with other functions, be it in isolation or in co-operation with other elements. The invention can be implemented by means of hardware comprising several distinct elements, and by means of a suitably programmed computer. The mere fact that certain measures are recited in mutually different dependent claims does not indicate that a combination of these measures cannot be used to advantage. 'Software' and "Computer Program Product" are to be understood to mean any software product stored on a computer-readable medium, such as a floppy disk, downloadable via a network, such as the Internet, or marketable in any other manner.

## Claims

1. A method of detecting an object in a sensor area of a sensor, comprising the steps of:
- detecting (1) an object in a first region of a sensor area of a sensor, said first region being equal to or smaller than said sensor area;
- determining (3) whether said object is used to make a gesture in said first region;
- detecting (5) said object in a second region of said sensor area, said second region being smaller than said first region and said first region encompassing said second region;
- determining (7) coordinates of said object in said second region, said coordinates representing an absolute position of said object in said second region; and
- causing (9) a display to display a pointer at a position corresponding to said coordinates and to display information in response to said determined gesture.

2. A method as claimed in claim 1, wherein said determining (3) whether said object is used to make a gesture in said first region comprises determining that said object is used to make a gesture when the speed of said object in said first region exceeds a predetermined threshold.

3. A method as claimed in claim 1 or 2, wherein said determining (3) whether said object is used to make a gesture in said first region comprises determining that said object is used to make a gesture when said object is detected outside said second region.

4. A method as claimed in any of the preceding claims, wherein said sensor comprises a camera.

5. A method as claimed in any of the preceding claims, wherein said object comprises a light source and detecting said object in said first and second regions comprises detecting said light source.

6. A method as claimed in any of the preceding claims, further comprising a step of defining (11) the positions and dimensions of said first and second regions upon detecting a calibration event.

7. A method as claimed in claim 6, wherein said calibration event is detected when no object is determined in one of said first region and said sensor area for a predetermined amount of time.

8. A computer program product enabling a programmable device to perform the method of any of claims 1 to 7.

9. An electronic device (21) for detecting an object (25) in a sensor area of a sensor (27), comprising:
a processor (23) operative to:
- detect an object (25) in a first region of a sensor area of a sensor (27), said first region being equal to or smaller than said sensor area;
- determine whether said object (25) is used to make a gesture in said first region;
- detect said object (25) in a second region of said sensor area, said second region being smaller than said first region and said first region encompassing said second region;
- determine coordinates of said object (25) in said second region, said coordinates representing an absolute position of said object (25) in said second region; and
- cause a display (29) to display a pointer at a position corresponding to said coordinates and to display information in response to said determined gesture.

10. An electronic device as claimed in claim 9, wherein said processor (23) is operative to determine that said object is used to make a gesture when the speed of said object in said first region exceeds a predetermined threshold.

11. An electronic device as claimed in claim 9 or 10, wherein said processor (23) is operative to determine that said object is used to make a gesture when said object is detected outside said second region.

12. An electronic device as claimed in any of claims 9 to 11, wherein said sensor (27) comprises a camera.

13. An electronic device as claimed in any of claims 9 to 12, wherein said object (25) comprises a light source (31) and detecting said object (25) in said first and second regions comprises detecting said light source (31).

14. An electronic device as claimed in any of claims 9 to 13, wherein said processor (23) is further operative to define the positions and dimensions of said first and second regions upon detecting a calibration event.

15. An electronic device as claimed in claim 14, wherein said processor (23) is further operative to detect said calibration event when no object (25) is determined in one of said first region and said sensor area for a predetermined amount of time.
